(19) Europäisches Patentamt
European Patent Office
Office européen des brevets

(11) **EP 4 191 491 A1**

(12) **EUROPEAN PATENT APPLICATION**
published in accordance with Art. 153(4) EPC

(43) Date of publication:
**07.06.2023 Bulletin 2023/23**

(21) Application number: **21848571.2**

(22) Date of filing: **05.07.2021**

(51) International Patent Classification (IPC):
**G06Q 10/08** (2023.01)

(52) Cooperative Patent Classification (CPC):
**G06Q 10/08;** Y02P 90/30

(86) International application number:
**PCT/JP2021/025371**

(87) International publication number:
**WO 2022/024679 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.07.2020 JP 2020130970**

(71) Applicant: **JFE Steel Corporation**
**Tokyo 100-0011 (JP)**

(72) Inventors:
• **KUMANO, Akira**
**Tokyo 100-0011 (JP)**
• **NAKATSUJI, Kazuhiro**
**Tokyo 100-0011 (JP)**
• **ODA, Kazuki**
**Tokyo 100-0011 (JP)**

(74) Representative: **Hoffmann Eitle**
**Patent- und Rechtsanwälte PartmbB**
**Arabellastraße 30**
**81925 München (DE)**

(54) **SHIP ALLOCATION PLAN FORMULATION METHOD, AND OPERATION METHOD AND SHIP ALLOCATION PLAN FORMULATION DEVICE THAT ARE BASED ON SAID SHIP ALLOCATION PLAN FORMULATION METHOD**

(57)     Provided is a ship allocation plan creation method, an operation method, and a ship allocation plan creation device capable of creating, without simulation, a ship allocation plan in consideration of both stable supply of raw material from a plurality of loading ports to a transit port and a plurality of unloading ports and minimum transportation cost. A ship allocation plan creation method of creating a ship allocation plan that includes a schedule of transporting a plurality of brands of raw material by ship, comprises a transit port brand aggregation process (S200) of performing calculation for unloading and mixing predetermined brands to aggregate the predetermined brands as a new brand at the transit port, wherein the new brand results from the mixing at a mix proportion to have a desired composition required at the plurality of unloading ports, and is included in brands to be transported to the unloading ports.

*FIG. 2*

```
                    ┌─────────┐
                    │  Start  │
                    └────┬────┘
                         │
        ┌────────────────────────────────┐
        │      Data reading process      │ ~ S100
        └────────────────┬───────────────┘
                         │
        ┌────────────────────────────────┐
        │ Transit port brand aggregation │ ~ S200
        │            process             │
        └────────────────┬───────────────┘
                         │
        ┌────────────────────────────────┐
        │     Required cargo handling    │ ~ S300
        │    amount calculation process  │
        └────────────────┬───────────────┘
                         │
        ┌────────────────────────────────┐
        │ Ship allocation calculation    │ ~ S400
        │            process             │
        └────────────────┬───────────────┘
                         │
                    ┌────┴────┐
                    │   End   │
                    └─────────┘
```

**Description**

TECHNICAL FIELD

The present disclosure relates to a ship allocation plan creation method, an operation method based on the ship allocation plan creation method, and a ship allocation plan creation device.

BACKGROUND

When transporting raw material by ship, it is important to appropriately make a transportation plan that defines a ship to be used, articles to be loaded, and a route to the destination, for stable supply and transportation cost reduction. Especially for factories that manufacture products from transported raw material, raw material needs to be transported from loading ports of raw material suppliers so that stocks of raw material can be secured, and thus stable supply is required. However, as the types of raw material to be handled and the number of factories as loading ports and unloading ports increase, the transportation plan becomes more complex, making it difficult to plan for transportation cost reduction. To solve such a problem, various plan creation methods using optimization techniques such as mathematical programming and metaheuristics have been proposed.

In steelworks which is one of the application fields of the foregoing techniques, steel products are produced daily using raw material transported from overseas. For stable production of high-quality products, it is necessary to perform composition adjustment by mixing a plurality of raw materials. Hence, a plurality of raw materials need to be stably supplied to steelworks without a shortage. Meanwhile, there is also a need to reduce the raw material transportation cost. To balance the quality and the transportation cost, an appropriate transportation plan (ship allocation plan in this case) needs to be created. The transportation cost includes ship charter cost, demurrage paid to the ship owner in the case where cargo handling requires a larger number of days than the contracted schedule, etc.

There are a plurality of ports (loading ports) of raw material suppliers overseas, and different brands of raw material are loaded at one or more loading ports in one voyage. Hereafter, a brand of raw material loaded at a loading port is also referred to as "original brand" in order to distinguish it from a new brand at a transit port described later. There are also a plurality of unloading ports to which raw material is supplied, and raw material is unloaded at one or more unloading ports in one voyage. At one loading port, a plurality of types of original brands of raw material can be loaded. As the ship for voyage, a bulk ship having separate cargo loading parts is used. Bulk ships come in several different sizes, which differ in loading capacity and charter cost. Moreover, there are two types of ship contracts. One is a dedicated ship that is contracted exclusively for a long period of time and needs to be used preferentially. The other is a spot ship that is arranged each time a voyage is to be made. Usually, several hundred voyages are made each year. For each voyage, it is necessary to make a loading port schedule that defines a ship allocation date, a ship to be used, a loading port, a loading brand, and a loading amount and an unloading port schedule that defines an unloading port, an unloading brand, and an unloading amount. Since both the loading port schedule and the unloading port schedule need to be taken into consideration in this way, there are many decision items which are variables, and possible combinations are enormous. Enumerating a large number of combinations makes it impossible to perform calculation in a practical amount of time. Hence, various plan creation methods using optimization techniques such as mathematical programming and metaheuristics have been proposed in order to obtain optimal solutions from the viewpoint of stable supply of raw material and transportation cost reduction.

For example, in JP H11-310313 A (PTL 1), simulation of setting the operation order of each transportation means and the types of transported articles and, based on the settings, calculating the arrival date and the arrival amount of each article type is repeatedly performed, and an optimal physical distribution plan is created using metaheuristics. In JP 4669583 B2 (PTL 2), combination patterns of loading and unloading ports for which operation is possible for each ship and a mathematical model representing supply and demand balance constraints at each unloading port are created, and optimization calculation is performed using mathematical programming and thereafter a ship allocation plan is made in detail through simulation.

CITATION LIST

Patent Literature

PTL 1: JP H11-310313 A
PTL 2: JP 4669583 B2

SUMMARY

(Technical Problem)

However, in PTL 1, the number of unloading ports on one voyage is 1, and unloading at a plurality of unloading ports and the presence of a transit port are not taken into consideration. The transit port herein is a place where raw material is temporarily accumulated and optionally mixing of raw material is performed to generate a new brand that is required at an unloading port.

In PTL 2, after optimization calculation, simulation is performed for, for example, avoiding overlapping of cargo handling of ships at a berth. There is thus a possibility that the simulation results obtained by changing the cargo handling times of the ships so as to avoid overlapping deviate from the results obtained by the optimization calculation and the balance between supply and demand worsens. In particular, for example in the case where the berth capacity is not sufficient, the possibility of the balance between supply and demand worsening increases, and a lack of stock may occur. Besides, in PTL 2, in the case where there is a transit port, the simulation becomes complex and the balance between supply and demand is likely to further worsen.

It could therefore be helpful to provide a ship allocation plan creation method, an operation method based on the ship allocation plan creation method, and a ship allocation plan creation device capable of creating, with no need for simulation, a ship allocation plan in consideration of both stable supply of raw material from a plurality of loading ports to a transit port and a plurality of unloading ports and minimum transportation cost.

(Solution to Problem)

A ship allocation plan creation method according to an embodiment of the present disclosure is a ship allocation plan creation method of creating a ship allocation plan that includes a schedule of transporting a plurality of brands of raw material by ship from a plurality of loading ports to a plurality of unloading ports via a transit port, the ship allocation plan creation method comprising a transit port brand aggregation process of performing calculation for unloading and mixing predetermined brands to aggregate the predetermined brands as a new brand at the transit port, wherein the new brand results from the mixing at a mix proportion to have a desired composition required at the plurality of unloading ports, and is included in brands to be transported to the plurality of unloading ports.

An operation method according to an embodiment of the present disclosure is an operation method of operating steelworks using a ship allocation plan created by the above-described ship allocation plan creation method.

A ship allocation plan creation device according to an embodiment of the present disclosure is a ship allocation plan creation device configured to create a ship allocation plan that includes a schedule of transporting a plurality of brands of raw material by ship from a plurality of loading ports to a plurality of unloading ports via a transit port, the ship allocation plan creation device comprising a transit port brand aggregator configured to perform calculation for unloading and mixing predetermined brands to aggregate the predetermined brands as a new brand at the transit port, wherein the new brand results from the mixing at a mix proportion to have a desired composition required at the plurality of unloading ports, and is included in brands to be transported to the plurality of unloading ports.

(Advantageous Effect)

It is thus possible to provide a ship allocation plan creation method, an operation method based on the ship allocation plan creation method, and a ship allocation plan creation device capable of creating, with no need for simulation, a ship allocation plan in consideration of both stable supply of raw material to a transit port and unloading ports and minimum transportation cost. With a ship allocation plan that involves a transit port, brands required at a plurality of unloading ports can be managed and aggregated at the transit port. This can ease stock management at each of the plurality of unloading ports, and prevent incurring demurrage, etc.

BRIEF DESCRIPTION OF THE DRAWINGS

In the accompanying drawings:

FIG. 1 is a block diagram of a ship allocation plan creation device according to an embodiment of the present disclosure;
FIG. 2 is a flowchart illustrating the operation of the ship allocation plan creation device according to the embodiment of the present disclosure;
FIG. 3 is a diagram illustrating information indicating the stock amount of each brand at each unloading port;
FIG. 4 is a diagram illustrating information indicating the yard capacity at each unloading port;

FIG. 5 is a diagram illustrating information indicating the cargo handling efficiency and cargo handling unavailable days of each berth;

FIG. 6 is a diagram illustrating information indicating the hatch size and the number of hatches of each ship size;

FIG. 7 is a diagram illustrating information indicating the ship size that cannot enter each loading port and each unloading port;

FIG. 8 is a diagram illustrating information indicating the loadable amount of each brand;

FIG. 9 is a diagram illustrating information indicating the number of days of navigation from Japan to each loading port;

FIG. 10 is a diagram illustrating information indicating the number of days of navigation between loading ports;

FIG. 11 is a diagram illustrating information indicating the number of days of navigation between unloading ports;

FIG. 12 is a diagram illustrating information indicating the number of days of navigation between loading ports and transit ports;

FIG. 13 is a diagram illustrating information indicating the number of days of navigation from each transit port to Japan;

FIG. 14 is a diagram illustrating information indicating the number of days of cargo handling at each loading port;

FIG. 15 is a diagram illustrating information indicating the ship size, scheduled voyage end date, DES (despatch (dispatch) money) rate, DEM (demurrage) rate, and discharging rate of each dedicated ship;

FIG. 16 is a diagram illustrating information indicating the ship size, charter cost, DES rate, DEM rate, and discharging rate of each spot ship;

FIG. 17 is a flowchart illustrating a transit port brand aggregation process;

FIG. 18 is a flowchart illustrating a required cargo handling amount calculation process;

FIG. 19 is a diagram illustrating information indicating the required unloading amount on each elapsed day;

FIG. 20 is a diagram illustrating information indicating the required unloading amount in each request period;

FIG. 21 is a diagram illustrating information indicating a list of route patterns;

FIG. 22 is a diagram illustrating information indicating provisional voyage patterns;

FIG. 23 is a diagram illustrating information indicating an example of voyage patterns; and

FIG. 24 is a diagram illustrating the effects of an example.

## DETAILED DESCRIPTION

An embodiment according to the present disclosure will be described below. Scheduling of transportation of iron ore to steelworks will be described below as an example, although the presently disclosed techniques are not limited to such and can also be applied to transportation of crude oil and the like.

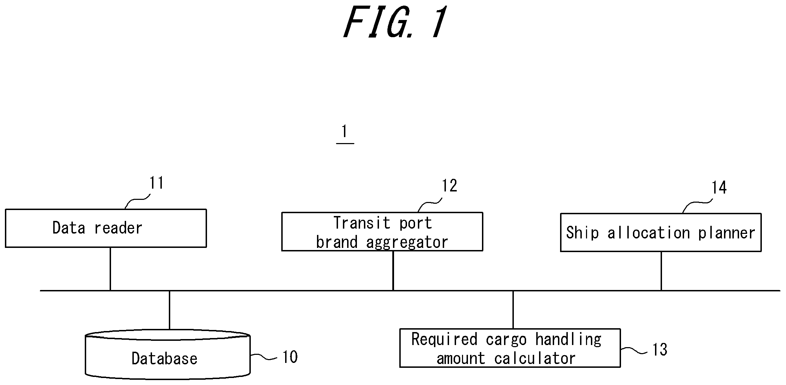

FIG. 1 is a block diagram of a ship allocation plan creation device 1 according to an embodiment of the present disclosure. The ship allocation plan creation device 1 includes a database 10, a data reader 11, a transit port brand aggregator 12, a required cargo handling amount calculator 13, and a ship allocation planner 14. Ships can be allocated according to a ship allocation plan created by the ship allocation plan creation device 1, and factories such as steelworks can be operated. In other words, factories such as steelworks can be operated by an operation method using a ship allocation plan created by the ship allocation plan creation device 1.

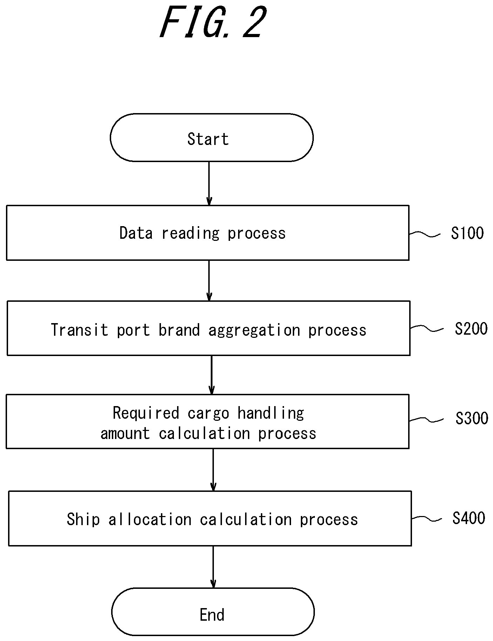

FIG. 2 is a flowchart illustrating an overview of the operation of the ship allocation plan creation device 1 according to the embodiment of the present disclosure. Briefly speaking, the ship allocation plan creation device 1 according to this embodiment creates a ship allocation plan that includes a schedule of transporting a plurality of brands by ship from a plurality of loading ports to a plurality of unloading ports via a transit port and mixing of raw material. For scheduling, first, the data reader 11 in the ship allocation plan creation device 1 performs a data reading process (step S100). In the data reading process, the data reader 11 reads information necessary for creating a ship allocation plan from the database 10. The necessary information includes information about the stock amount and stock upper and lower limits of each of a plurality of brands at each of a transit port and a plurality of unloading ports, the berth cargo handling efficiency at each of the transit port and the plurality of unloading ports, the loadable amount of each brand at each of a plurality of loading ports, the ship capacity, and the ship transportation cost. The necessary information may also include, for example, information about the raw material use amount at each of the unloading ports and the transit port and the loading capacity of each ship size, information about the ship size that can enter each unloading port and the number of days of navigation, and information about the number of days of cargo handling at each loading port, the already scheduled voyage end date, and the transportation cost.

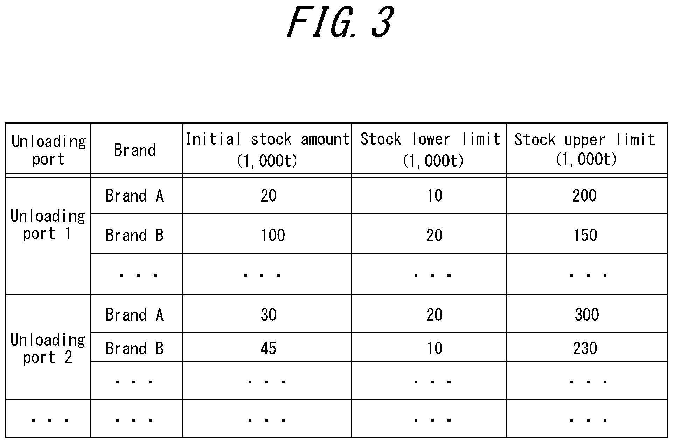

Next, the transit port brand aggregator 12 performs a transit port brand aggregation process (step S200). The transit port brand aggregation process is a process of calculating brands to be selected, a mix proportion, and the like so that brands required at each unloading port can be efficiently aggregated at a transit port. In the transit port brand aggregation process, predetermined brands are selected and mixed. The predetermined brands herein are original brands that are mixed (blended) as a new brand at the transit port. The mixed original brands are defined as the new brand, and aggregated (put together) at the transit port. The new brand herein is a brand of a desired composition required at the unloading port (for example, see brand A and brand B in FIG. 3). The information about the stock upper and lower limits and the raw material use amount at each unloading port, which is read by the data reader 11, are updated as appropriate.

Next, the required cargo handling amount calculator 13 performs a required cargo handling amount calculation process (step S300). In the required cargo handling amount calculation process, based on the stock upper and lower limits read by the data reader 11, the unloading timing and the unloading amount per unloading at each unloading port necessary to keep the raw material stock within the stock upper and lower limits are calculated.

Next, the ship allocation planner 14 performs a ship allocation calculation process (step S400). In the ship allocation calculation process, a ship allocation plan that minimizes the voyage-related cost while satisfying the required unloading amount calculated by the required cargo handling amount calculator 13 is created.

Each of the data reading process (step S100), the transit port brand aggregation process (step S200), the required cargo handling amount calculation process (step S300), and the ship allocation calculation process (step S400) performed by the ship allocation plan creation device 1 as a ship allocation plan creation method will be described below.

[Data reading process]

The data reader 11 in the ship allocation plan creation device 1 reads a plan period (plan start date and plan end date) and various information necessary for creating a ship allocation plan, from user input or from the database 10. FIGS. 3 to 16 illustrate examples of information stored in the database 10. The data reader 11 reads these information.

FIG. 3 is a diagram illustrating information of the stock amount of each brand at each unloading port (unloading port 1, unloading port 2, ...). The "initial stock amount" is the stock amount of each brand on the plan start date (initial state) at each unloading port. The "stock lower limit" indicates the lower limit of the stock of each brand. It is desirable that the stock amount of each brand is constantly greater than or equal to the lower limit. The "stock upper limit" indicates the upper limit of the stock of each brand. It is desirable that the stock amount of each brand is constantly less than or equal to the upper limit. The "stock upper and lower limits" denote a combination of the stock upper limit and the stock lower limit. The information of the stock amount of each brand in FIG. 3 may include information of the stock amount of each brand at the transit port. Alternatively, the information of the stock amount of each brand at the transit port may be stored in the database 10 separately from the information of the stock amount of each brand at each unloading port and read by the data reader 11.

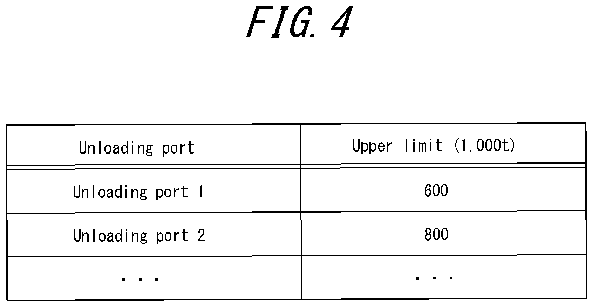

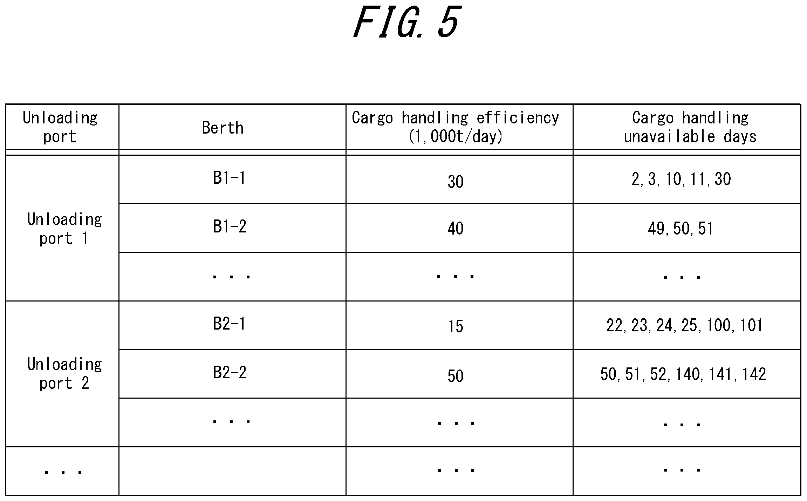

FIG. 4 is a diagram illustrating information indicating the yard capacity at each unloading port. The "upper limit" indicates the maximum value determined from the size of the yard of each unloading port. FIG. 5 is a diagram illustrating information indicating the cargo handling efficiency and cargo handling unavailable days of each berth. For example, unloading port 1 has berths B1-1, B1-2, etc., and the cargo handling efficiency of each berth is set. A cargo handling unavailable day is a day on which cargo handling cannot be performed at the berth due to, for example, periodic facility maintenance, and is expressed by the number of days elapsed from the plan start date. For example, at berth B1-2 of unloading port 1, cargo handling cannot be performed on the 49th, 50th, and 51st days from the plan start date, as illustrated in FIG. 5. The information in FIG. 4 and the information in FIG. 5 may respectively include information of the yard capacity at the transit port and information of each berth at the transit port. Alternatively, these information of the transit port may be stored in the database 10 separately from the information in FIGS. 4 and 5 and read by the data reader 11.

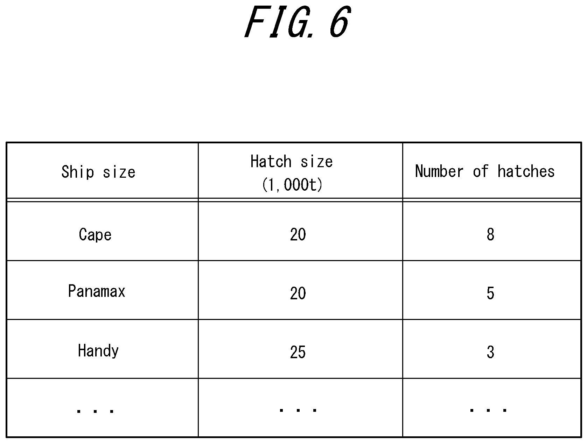

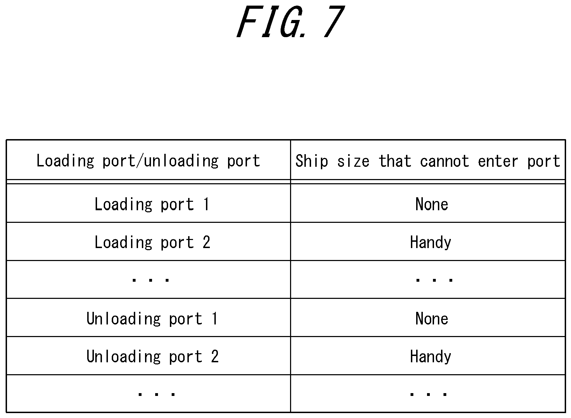

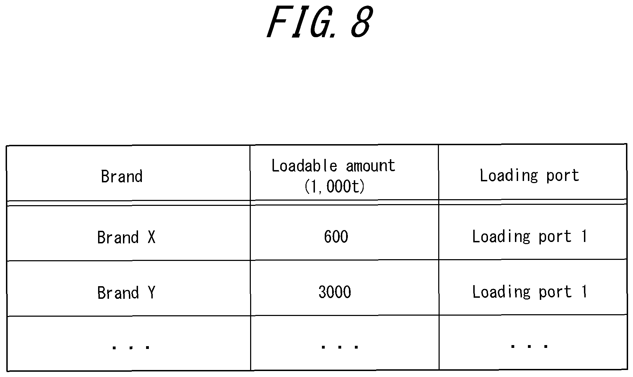

FIG. 6 is a diagram illustrating information indicating the ship capacity, specifically, the hatch size and the number of hatches of each ship size. The ship sizes are, for example, cape size, panamax size, and handy size, which are expressed respectively as "cape", "panamax", and "handy" in FIG. 6. The loading capacity of each ship size is determined by the hatch size and the number of hatches illustrated in FIG. 6. FIG. 7 is a diagram illustrating information indicating the ship size (or ship sizes) that cannot enter each loading port and each unloading port. The ship size that cannot enter each loading port and each unloading port is indicated by the name of the ship size in FIG. 6. In FIG. 7, "none" means that ships of all ship sizes illustrated in FIG. 6 can enter the loading port or unloading port. The information indicating the ship size that cannot enter each loading port and each unloading port in FIG. 7 may include information of the ship size that cannot enter the transit port. Alternatively, the information of the ship size that cannot enter the transit port may be stored in the database 10 separately from the information in FIG. 7 and read by the data reader 11. For efficient transportation, it is preferable that the "ship size that cannot enter the transit port" is "none". FIG. 8 is a diagram illustrating information indicating the loadable amount of each brand and its loading port. The loadable amount and the loading port are determined, for example, based on an agreement with the supplier of the raw material. In the example in FIG. 8, brand X and brand Y are each a brand of raw material loaded at a loading port, i.e. an original brand. The information in FIG. 8 may include new brands resulting from mixing at the transit port. Alternatively, information such as the loadable amount of each new brand may be stored in the database 10 separately from the information in FIG. 8 and read by the data reader 11.

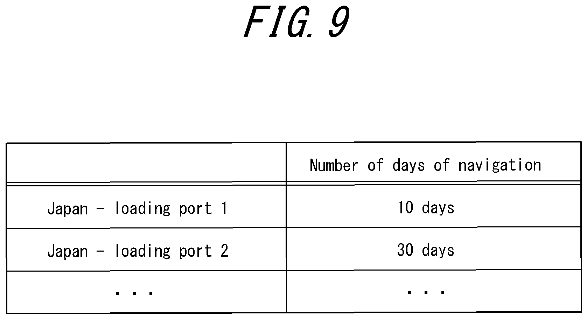

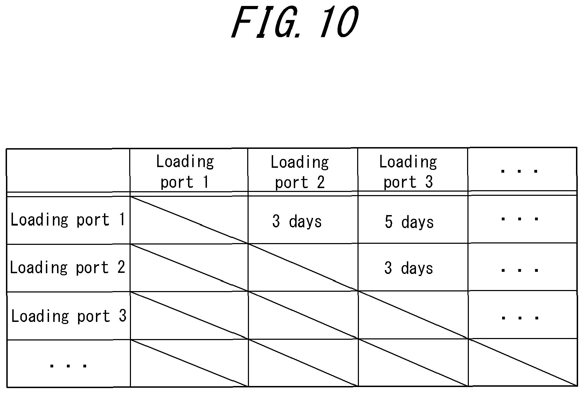

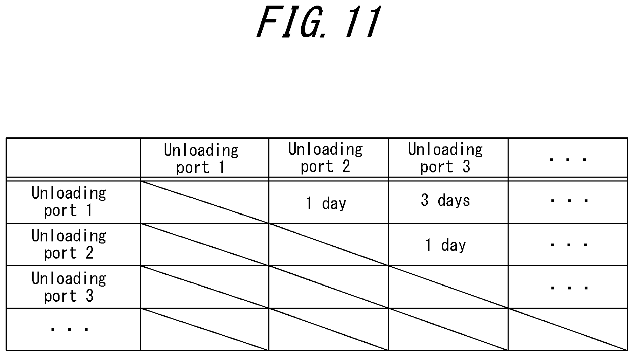

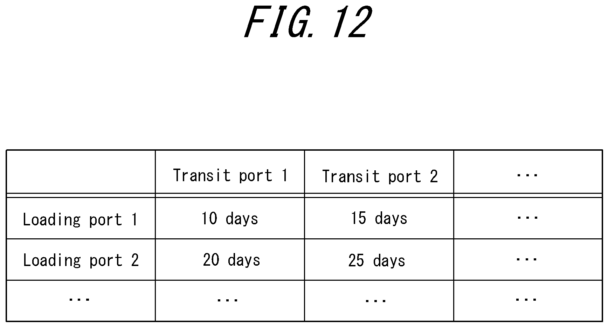

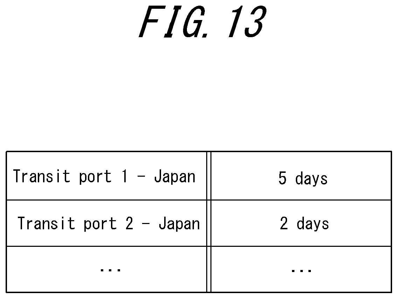

FIGS. 9 to 13 are each a diagram illustrating information about the number of days of navigation, which is necessary to determine the voyage schedule. FIG. 9 is a diagram illustrating information indicating the number of days of navigation from Japan to each loading port. As illustrated in FIG. 9, for example, it takes 10 days from Japan to loading port 1, and it takes 30 days from Japan to loading port 2. FIG. 10 is a diagram illustrating information indicating the number of days of navigation between the loading ports. As illustrated in FIG. 10, it takes 3 days of navigation between loading port 1 and loading port 2, it takes 5 days of navigation between loading port 1 and loading port 3, and it takes 3 days of navigation between loading port 2 and loading port 3. FIG. 11 is a diagram illustrating information indicating the number of days of navigation between the unloading ports. As illustrated in FIG. 11, it takes 1 day of navigation between unloading port 1 and unloading port 2, it takes 3 days of navigation between unloading port 1 and unloading port 3, and it takes 1 day of navigation between unloading port 2 and unloading port 3. Information about the number of days of navigation between the loading ports and the unloading ports, information about the number of days of navigation between the loading ports and the transit ports, and information about the number of days of navigation between each transit port and Japan are equally stored in the database 10 and read by the data reader 11. As an example of the information about the loading ports and the transit ports, it takes 10 days of navigation between loading port 1 and transit port 1, as illustrated in FIG. 12. As an example of the information about the transit ports and Japan, it takes 5 days of navigation from transit port 1 to Japan where an unloading port is located, as illustrated in FIG. 13.

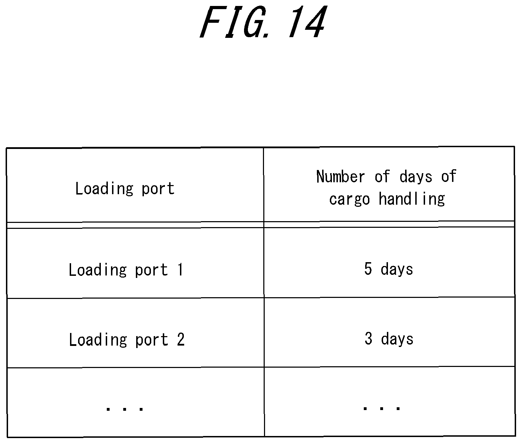

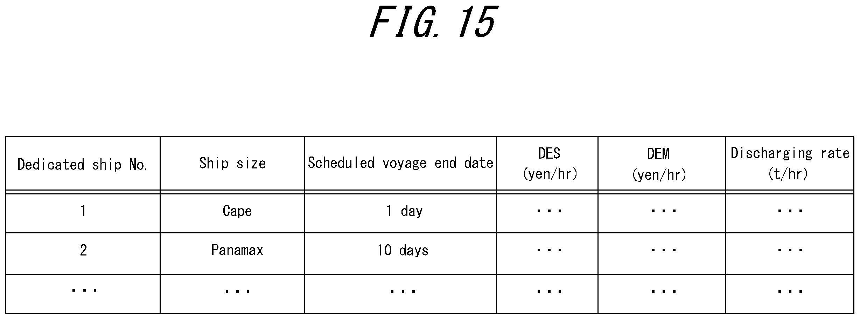

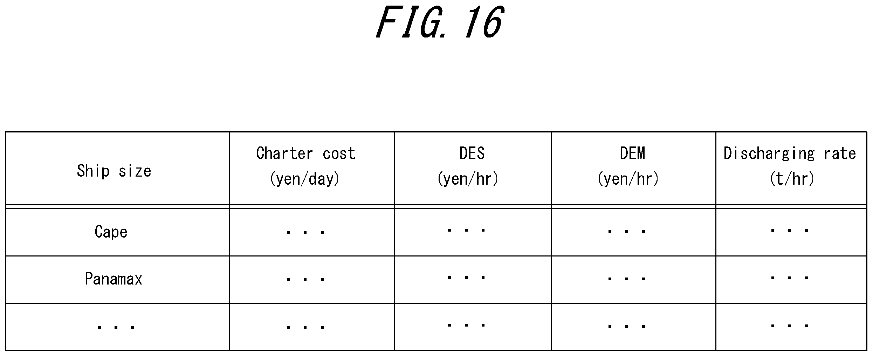

FIG. 14 is a diagram illustrating information indicating the number of days of cargo handling at each loading port. The information in FIG. 14 may include information of the number of days of cargo handling at the transit port. Alternatively, the information of the number of days of cargo handling at the transit port may be stored in the database 10 separately from the information indicating the number of days of cargo handling at each loading port and read by the data reader 11. FIG. 15 is a diagram illustrating information indicating the ship size, scheduled voyage end date, DES (despatch (dispatch) money) rate, DEM (demurrage) rate, and discharging rate of each dedicated ship. The scheduled voyage end date is expressed by the number of days elapsed from the plan start date. FIG. 16 is a diagram illustrating information indicating the ship size, charter cost, DES rate, DEM rate, and discharging rate of each spot ship. The DES rate, the DEM rate, and the discharging rate are necessary when calculating demurrage or despatch, and are set to values contractually determined for each ship.

[Transit port brand aggregation process]

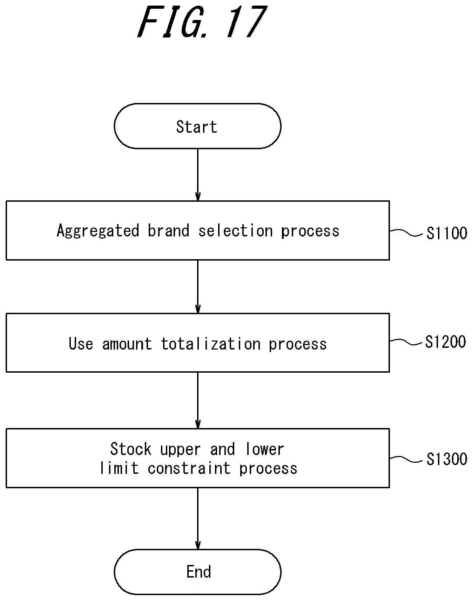

After the data reading by the data reader 11, the transit port brand aggregator 12 performs the transit port brand aggregation process. The transit port brand aggregation process is performed as illustrated in the flowchart of FIG. 17. In an aggregated brand selection process S1100, original brands to be mixed are selected as a new brand defined at the transit port. Original brands that can be selected may be, for example, all brands of fine ore and lump ore. That is, all these brands may be unloaded at the transit port. At least predetermined brands are unloaded from among all brands of fine ore and lump ore. Next, in a use amount totalization process S 1200, the mix proportion of the original brands is determined so that the new brand will have a desired composition, and the use amounts of the original brands at the transit port are set based on the mix proportion. For example, brand A (see FIG. 3), which is a new brand, may be obtained by mixing brand X and brand Y (see FIG. 8), which are original brands, at a mix proportion of 1:1. Such a mix proportion may be stored in the database 10 beforehand and read by the transit port brand aggregator 12. The mix proportion may be read by the data reader 11 and used by the transit port brand aggregator 12. The mix proportion may be calculated by the transit port brand aggregator 12. Here, a known method such as solving a nonlinear programming problem may be used for a mixing plan determining the mix proportion. Next, in a stock upper and lower limit constraint process S1300, stock upper and lower limits are set for appropriately maintaining the stock amount for each brand to be aggregated at the transit port. Here, the brands aggregated at the transit port include new brands. The brands aggregated at the transit port may include original brands. For example, the stock upper and lower limits may be set higher for an original brand with a larger use amount set in the use amount totalization process S 1200. While it is assumed here that the raw material is iron ore, in the case where the raw material includes metallurgical coal, a new metallurgical coal bland may be equally compounded by mixing original brands at a desired mix proportion.

[Required cargo handling amount calculation process]

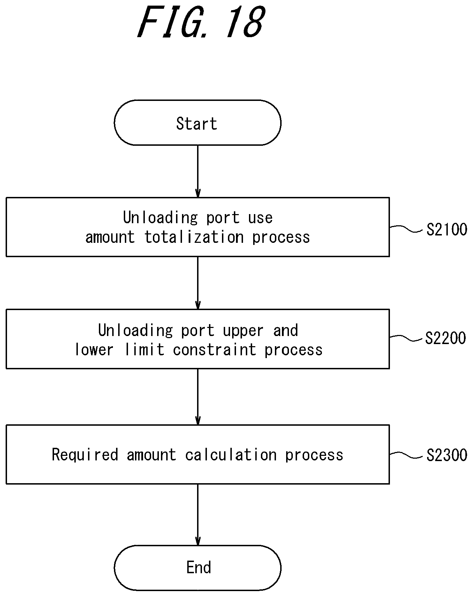

After the transit port brand aggregation process by the transit port brand aggregator 12, the required cargo handling amount calculator 13 performs the required cargo handling amount calculation process. The required cargo handling amount calculation process is performed as illustrated in the flowchart of FIG. 18. First, in an unloading port use amount totalization process S2100, the use amount of each brand including at least one new brand is totalized for each unloading port. Next, in an unloading port upper and lower limit constraint process S2200, stock upper and lower limit constraints are set to keep the stock amount of each brand at each unloading port at an appropriate value. Here, it is desirable to set the upper and lower limit constraints according to the ratio of the use amount of each brand at each unloading port read by the data reader 11. Next, in a required amount calculation process S2300, the required unloading amount of each brand on each day is set. The required unloading amount is the unloading amount of each brand necessary to keep the stock of the brand within the stock upper and lower limits at each of the plurality of unloading ports including the transit port.

The calculation process for keeping the stock of each brand within the stock upper and lower limits at each of the plurality of unloading ports including the transit port can be represented by the following linear formulas, and a solution can be obtained by mixed linear programming. The unloading ports including the transit port are hereafter also referred to as "unloading ports, etc.", and one of the unloading ports, etc. is referred to as "unloading or other port".

First, the stock transition of each brand at each unloading or other port is represented by the following formulas (1-1) and (1-2).

$$y_{p,m,t} = \text{InitialStock}_{p,m} \quad t = 0, \ p \in P, \ m \in M \quad (1-1)$$

$$y_{p,m,t} = y_{p,m,t-1} - Comsum_{p,m} + unloadAmount_{p,m,t} \quad t \in T \setminus \{0\}, \ p \in P, \ m \in M \quad (1-2)$$

where t, T, p, P, m, M, $y_{p,m,t}$, unloadAmount$_{p,m,t}$, InitialStock$_{p,m}$, and Comsum$_{p,m}$ have the following respective meanings. The same applies hereafter.

t: the number of days elapsed from the plan start date in the case where the time-series unit of the stock transition is days.

T: a set of the numbers of elapsed days until the end date {1.. the number of elapsed days until the plan end date}.

p: an unloading or other port.

P: a set of unloading ports, etc.

m: a brand.

M: a set of brands.

$y_{p,m,t}$: the stock amount of brand m at unloading or other port p on elapsed day t.

unloadAmount$_{p,m,t}$: the unloading amount of brand m at unloading or other port p on elapsed day t, and a variable that takes a value of 0 or more.

InitialStock$_{p,m}$: the initial stock amount of brand m at unloading or other port p.

Comsum$_{p,m}$: a set value of consumption of brand m at unloading or other port p.

Constraint formulas for keeping the stock of each brand within the range of the stock upper and lower limits at each unloading or other port are represented by the following formulas (1-3) and (1-4).

$$y_{p,m,t} \geq StockLowerLmt_{p,m} \quad t \in T, \ p \in P, \ m \in M \quad (1-3)$$

$$y_{p,m,t} \leq StockUpperLmt_{p,m} \quad t \in T, \ p \in P, \ m \in M \quad (1-4)$$

where StockLowerLmt$_{p,m}$ and StockUpperLmt$_{p,m}$ have the following respective meanings. The same applies hereafter.

StockLowerLmt$_{p,m}$: the stock lower limit of the stock amount of brand m at unloading or other port p.

StockUpperLmt$_{p,m}$: the stock upper limit of the stock amount of brand m at unloading or other port p.

The upper limit illustrated in FIG. 4 is set for the yard capacity of brands unloaded at each unloading or other port. A constraint formula for the yard capacity at each unloading or other port is represented by the following formula (1-5).

$$\sum_{m \in M} y_{p,m,t} \leq YardCapa_p \quad t \in T, \ p \in P \quad (1-5)$$

where YardCapa$_p$ means the yard capacity at unloading or other port p. The same applies hereafter.

The amount that can be unloaded in one day is limited, for example, by the cargo handling efficiency and cargo handling unavailable days of each berth illustrated in FIG. 5. A constraint formula relating to such unloading facility is represented by the following formula (1-6).

$$\sum_{m \in M} unloadAmount_{p,m,t} \leq UnloadCapa_{p,t} \quad t \in T, \, p \in P \quad (1-6)$$

where $UnloadCapa_{p,t}$ means the upper limit of the amount that can be unloaded at unloading or other port p on elapsed day t. The same applies hereafter. For example, the upper limit of the amount that can be unloaded on each cargo handling unavailable day is set to 0.

In the required cargo handling amount calculation process, optimization is performed to obtain a solution that minimizes the total number of unloading operations at each unloading or other port. This can eliminate any solution that involves a small unloading amount and a large number of unloading operations, such as unloading a small amount of cargo every day. First, a variable for counting the total number of unloading operations is defined by the following formula (1-7).

$$if \quad unloadAmount_{p,m,t} > 0 \quad then \quad unload_{p,m,t} = 1 \quad t \in T, \, p \in P, \, m \in M \quad (1-7)$$

where $unload_{p,m,t}$ is a variable indicating whether brand m is unloaded at unloading or other port p on elapsed day t. In the case where $unload_{p,m,t}$ is 0, unloading is not performed. In the case where $unload_{p,m,t}$ is 1, unloading is performed.

Summing this counting variable for all schedules, all brands, and all unloading ports, etc. yields the total number of unloading operations. This objective function is represented by the following formula (1-8).

$$minimize \sum_{t \in T, \, p \in P, \, m \in M} unload_{p,m,t} \quad (1-8)$$

.

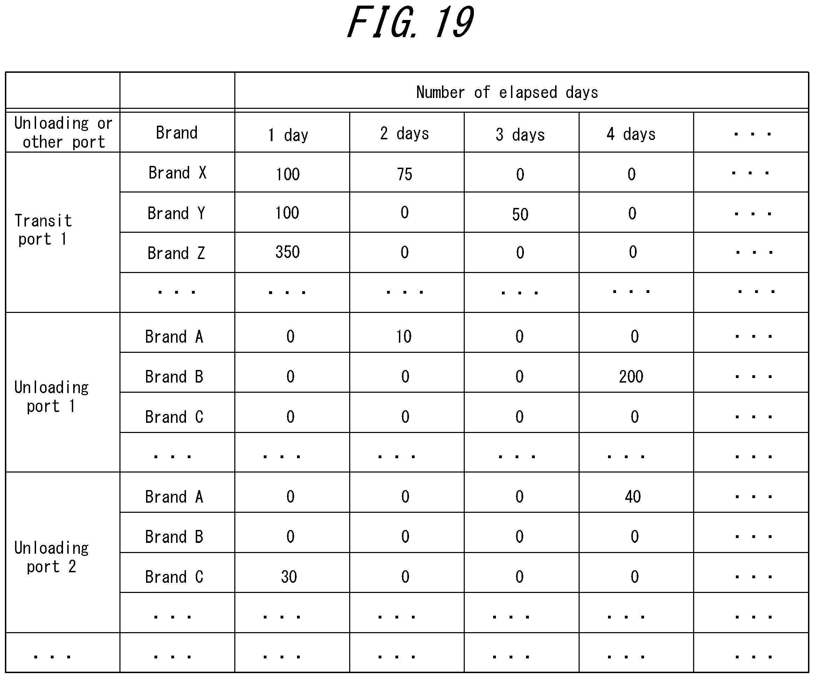

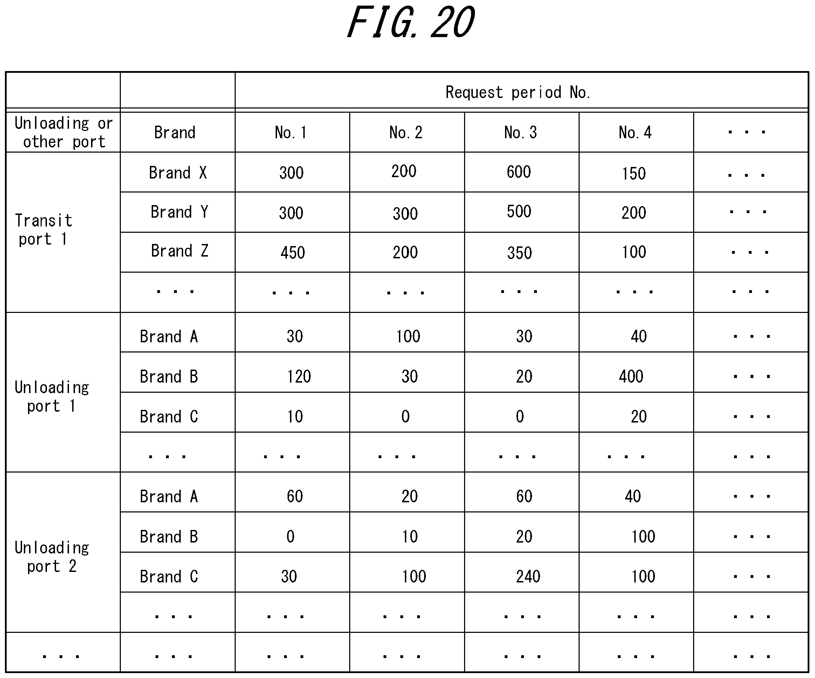

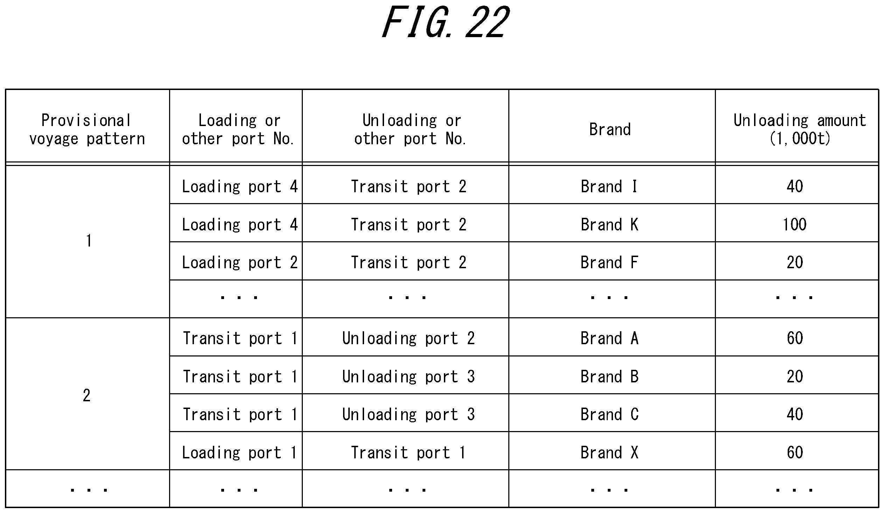

The required cargo handling amount calculator 13 calculates the required unloading amount based on the foregoing formulas (1-1) to (1-8). FIG. 19 illustrates an example of the required unloading amount depending on the number of elapsed days, which is obtained as a result of the calculation. The information in FIG. 19 indicates, for each brand, how much of the brand is required at what timing and at which unloading or other port. In the example in FIG. 19, for transit port 1, the required unloading amount is indicated using each original brand before mixing. For unloading port 1 and unloading port 2, the required unloading amount is indicated using each new brand. Since each new brand is obtained by mixing original brands at a predetermined proportion as mentioned above, conversion may be performed based on the mix proportion to indicate the required unloading amount using each original brand. Alternatively, the required unloading amount may be indicated using each new brand. In FIGS. 20 and 22 described below, too, the required unloading amount and the unloading amount may each be indicated using each original brand or each new brand.

FIG. 20 illustrates a result of aggregating the information of the required unloading amount per day illustrated in FIG. 19 per a predetermined period. In this embodiment, the predetermined period is two weeks, and is hereinafter referred to as "request period". For example, request period No. 1 in FIG. 20 is the sum of the required unloading amount for two weeks from elapsed day 1 to elapsed day 14 in FIG. 19. Request period No. 2 in FIG. 20 is the sum of the required unloading amount for two weeks from elapsed day 15 to elapsed day 28 in FIG. 19. The required unloading amount in the request period is also referred to as "request quota". The request period is not limited to two weeks, and may be any period such as one week.

[Ship allocation calculation process]

After the required cargo handling amount calculation process by the required cargo handling amount calculator 13, the ship allocation planner 14 performs a ship allocation planning process. The ship allocation planning process is a process of creating a ship allocation plan for reliably achieving the daily required unloading amount at each unloading or other port obtained in the required cargo handling amount calculation process. The ship allocation planner 14 creates a ship allocation plan that minimizes the transportation cost while meeting the constraints such as the draft constraints of the berths of the loading ports, the transit port, and the unloading ports and the loading capacity of the raw material ship.

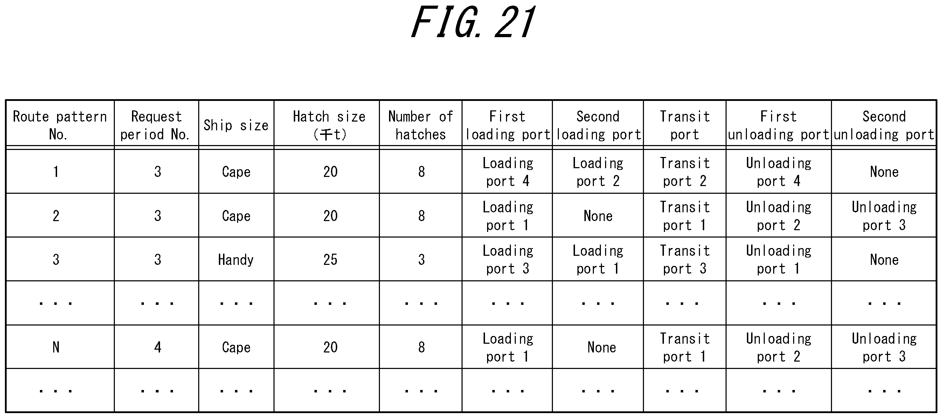

As an example, the ship allocation planner 14 may create the ship allocation plan in the following manner. First, the ship allocation planner 14 may create a provisional voyage pattern based on the calculation result (request quota) of the required cargo handling amount calculation process. FIG. 21 is a diagram illustrating information indicating a list of route patterns, enumerating all route patterns each of which defines a request period, a ship size, loading ports, a transit port, and unloading ports. The information of the ship size, the hatch size, and the number of hatches in FIG. 21 is based on the information illustrated in FIG. 6. Route patterns that cannot be taken due to the constraints are not listed in FIG. 21. For example, since there is a loading port, a transit port, and/or a unloading port where cargo handling cannot be performed depending on the ship size as illustrated in FIG. 7, each combination that does not meet ship size constraints is not listed as a route pattern. Although this embodiment describes the case where the maximum number of loading ports in each route pattern is 2 in total, i.e. a first loading port and a second loading port, and the maximum number of unloading ports in each route pattern is 2 in total, i.e. a first unloading port and a second unloading port, the maximum number of loading ports and the maximum number of unloading ports are not limited to 2, and may be 3 or more. Although this embodiment describes the case where the number of transit ports is 1, the number of transit ports is not limited to 1, and may be 2 or more.

The ship allocation planner 14 solves the following optimization problem to determine the loading brand and the loading amount at each loading port and the transit port and the unloading brand and the unloading amount at each unloading or other port in each route pattern and create a provisional voyage pattern. The loading ports including the transit port are hereafter also referred to as "loading ports, etc.", and one of the loading ports, etc. is referred to as "loading or other port". The provisional voyage pattern created needs to satisfy the request quota. A relational formula of the unloading amount of each route pattern and the fulfillment of the request quota is represented by the following formula (2-1).

$$\sum_{r \in RB(t')} HatchSize_r * unloadH_{r,p,m} + gapAmount_{p,m,t'} \geq Demand_{p,m,t'} \quad m \in M, \ t' \in T', \ p \in P \quad (2-1)$$

where t', T', r, R, RB(t'), $HatchSize_r$, $unloadH_{r,p,m}$, $gapAmount_{p,m,t'}$, and $Demand_{p,m,t'}$ have the following respective meanings. The same applies hereafter.

t': a request period.

T': a set of request periods.

r: a route pattern.

R: a set of route patterns.

RB(t'): a set of route patterns r in which unloading is performed in request period t'.

$HatchSize_r$: a constant (hatch size) representing the capacity of one hatch set in route pattern r.

$unloadH_{r,p,m}$: the unloading amount of brand m at unloading or other port p in route pattern r, expressed as the number of hatches.

$gapAmount_{p,m,t'}$: a value representing excess or deficiency from the request quota of brand m at unloading or other port p in request period t'.

$Demand_{p,m,t'}$: the request quota of brand m at unloading or other port p in request period t'.

Moreover, in the provisional voyage pattern created, the ship's cargo is fully loaded. The constraint formula is represented by the following formula (2-2).

$$if \ \sum_{m \in M, p \in P} unloadH_{r,p,m} > 0 \ then \quad \sum_{m \in M, p \in P} unloadH_{r,p,m} = HatchN_r \quad r \in R \quad (2-2)$$

where $HatchN_r$ is the number of hatches set in route pattern r. The same applies hereafter.

For a loading or other port and an unloading or other port at which a ship does not call, a constraint formula that loading is impossible and a constraint formula that unloading is impossible are represented respectively by the following formulas (2-3) and (2-4).

$$unloadH_{r,p,m} = 0 \quad m \notin MB(r), \ r \in R, \ p \in P \quad (2-3)$$

$$unloadH_{r,p,m} = 0 \quad m \in M, \ r \in R, \ p \notin PB(r) \quad (2-4)$$

where MB(r) and PB(r) have the following respective meanings. The same applies hereafter.

MB(r): a set of brands m loadable at a loading or other port called at in route pattern r.

PB(r): a set of unloading or other ports p called at in route pattern r.

The upper limit of the total loadable amount of each brand is, for example, the loadable amount illustrated in FIG. 8. Such a constraint formula is represented by the following formula (2-5).

$$\sum_{r \in R, p \in P} HatchSize_r * unloadH_{r,p,m} \leq SupplyUpperLmt_m \quad m \in M \quad (2-5)$$

where $SupplyUpperLmt_m$ represents the total loadable amount of brand m. The same applies hereafter.

In the provisional voyage pattern creation process, optimization is performed to minimize the total absolute value of the values that represent excess or deficiency from the request quota. This objective function is represented by the following formula (2-6).

$$minimize \sum_{p \in P, \, m \in M, \, t' \in T'} |gapAmount_{p,m,t'}| \quad (2-6)$$

Based on the foregoing formulas (2-1) to (2-6), the ship allocation planner 14 determines the loading amount, the unloading amount, etc. for each of route patterns No. 1 to No. N, and creates provisional voyage patterns No. 1 to No. N. FIG. 22 illustrates an example of provisional voyage patterns. The "unloading amount" represents the unloading amount at the unloading or other port. To perform unloading of the unloading amount, the same amount is loaded at the loading or other port. For example, provisional voyage pattern 1 in FIG. 22 is a provisional voyage pattern based on the route of route pattern 1. For brand I, 40,000 tons are loaded at loading port 4 and 40,000 tons are unloaded at transit port 2. For brand K, 100,000 tons are loaded at loading port 4 and 100,000 tons are unloaded at transit port 2. For brand F, 20,000 tons are loaded at loading port 2 and 20,000 tons are unloaded at transit port 2. A total unloading amount of 0 as a result of calculation means that voyage according to the route pattern is not performed.

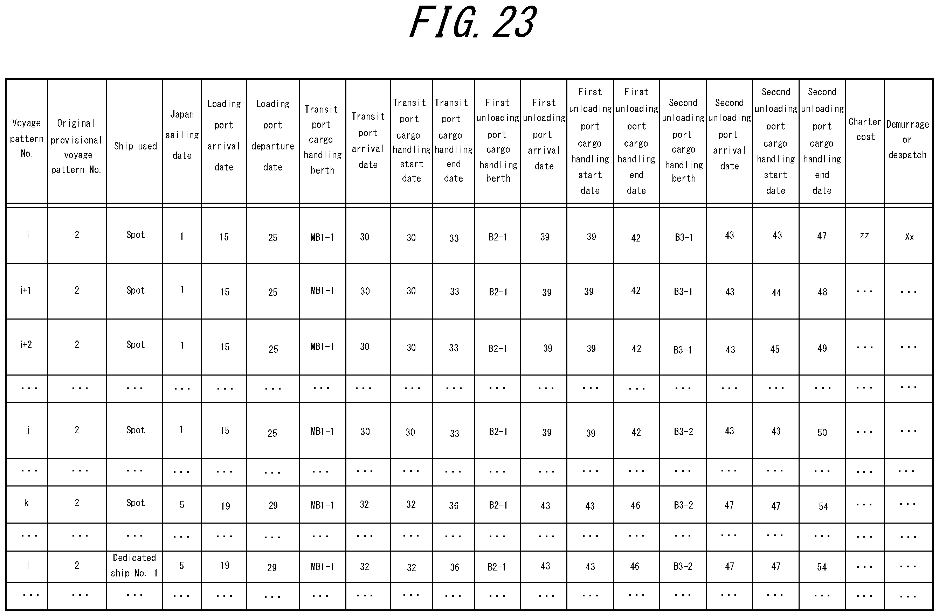

In each provisional voyage pattern illustrated in FIG. 22, the ship to be used and the voyage schedule in each request period are not determined yet. In each provisional voyage pattern, while the unloading ports, etc. are determined, at which berths of the unloading ports, etc. the cargo handling work is to be performed is not determined yet. The ship allocation planner 14 further creates, for each provisional voyage pattern, a plurality of voyage patterns by combining possible ships to be used, voyage schedules, and cargo handling berths. FIG. 23 is a diagram illustrating information indicating an example of a plurality of voyage patterns created based on provisional voyage pattern 2 in FIG. 22. Each schedule of a voyage pattern is calculated as follows:

Loading port arrival date = Japan sailing date + (the number of days of navigation between Japan and loading port).

Loading port departure date = loading port arrival date + (the number of days of cargo handling at first loading port + the number of days of navigation between first loading port and second loading port + the number of days of cargo handling at second loading port).

Transit port arrival date = loading port departure date + (the number of days of navigation between loading port and transit port).

Transit port cargo handling start date = transit port arrival date + the number of days of demurrage at transit port.

Transit port cargo handling end date = transit port cargo handling start date + the number of days of cargo handling at transit port.

First unloading port arrival date = transit port cargo handling end date + (the number of days of navigation between transit port and unloading port).

First unloading port cargo handling start date = first unloading port arrival date + the number of days of demurrage at first unloading port.

First unloading port cargo handling end date = first unloading port cargo handling start date + the number of days of cargo handling at first unloading port.

Second unloading port arrival date = first unloading port cargo handling end date + the number of days of navigation between first unloading port and second unloading port.

Second unloading port cargo handling start date = second unloading port arrival date + the number of days of demurrage at second unloading port.

Second unloading port cargo handling end date = second unloading port cargo handling start date + the number of days of cargo handling at second unloading port.

Here, the number of days of cargo handling at each unloading or other port is calculated from the unloading efficiency information and the unloading amount. For the number of days of cargo handling at each unloading or other port, the days during which the ship cannot dock at the berth are taken into consideration.

The charter cost is set as follows:

Charter cost of dedicated ship = 0.

Spot charter cost = (the number of days from Japan sailing date to second unloading port cargo handling end date) × fee (yen/day).

The foregoing fee is based on the charter fee of each ship size illustrated in FIG. 16.

When calculating demurrage or despatch, the following excess or deficiency time is calculated:

Excess or deficiency time (hr) = (cargo handling time (hr) at unloading or other port) − (cargo handling amount (t) at unloading or other port)/(discharging rate (t/hr) for each ship).

The discharging rate for each ship indicates the set value (contract value) of the cargo handling efficiency for each unloading or other port and for each ship. If efficiency that exceeds the cargo handling efficiency set based on the contract can be achieved, the excess or deficiency time is positive and a reward is given. If the efficiency falls below the set cargo handling efficiency, the excess or deficiency time is negative and a penalty occurs.

In the case where the excess or deficiency time is positive (i.e. cargo handling ends earlier than scheduled), the despatch is calculated based on the DES rate as follows. In the case where the excess or deficiency time is negative (i.e. cargo handling ends later than scheduled), the demurrage is calculated based on the DEM rate as follows.

Demurrage or despatch = DES (despatch) rate (yen/hr) × excess or deficiency time.

Demurrage or despatch = DEM (demurrage) rate (yen/hr) × excess or deficiency time.

For example, voyage pattern No. i in FIG. 23 is a voyage pattern that employs the following combination: The Japan sailing date is the plan start date, the transit port cargo handling berth is MB 1-1, the first unloading port cargo handling berth is B2-1, the second unloading port cargo handling berth is B3-1, and the number of days of demurrage at the transit port, the first unloading port, and the second unloading port is 0. Voyage patterns No. i + 1 and No. i + 2 are each a pattern in which the number of days of demurrage at the second unloading port is changed from voyage pattern No. i. Voyage pattern No. j is a pattern in which the second unloading port cargo handling berth is changed from voyage pattern No. i. Voyage pattern No. k is a pattern in which the Japan sailing date is changed from voyage pattern No. i. Voyage pattern No. l is a pattern in which the ship used is changed from a spot ship to a specific dedicated ship. In the case of considering a combination in which the Japan sailing date is changed, the first unloading port cargo handling start date is limited to be within the request period of the original provisional voyage pattern. Moreover, an upper limit is placed on the number of days of demurrage. The upper limit is, for example, 10 days. In this case, any voyage pattern in which the number of days of demurrage exceeds 10 days is not created. From the created plurality of voyage patterns, an optimization problem is solved by the below-described objective function based on the stock transition upper and lower limits, the berth resource constraints, and the upper limits of various brand contract amounts, and a voyage pattern used for the ship allocation plan is selected. The optimization problem is represented by the following formulas.

First, at a berth of an unloading or other port, only one ship can perform unloading work, and other ships cannot perform cargo handling work at the same berth simultaneously with the one ship. A constraint formula related to such berth resources is represented by the following formula (3-1).

$$\sum_{v \in VB(b,t)} useVoyage_v \leq 1 \quad b \in B, \ t \in T \quad (3-1)$$

where b, B, VB(b,t), v, and useVoyage$_v$ have the following respective meanings. The same applies hereafter.
b: a berth.
B: a set of berths b.
VB(b,t): a set of voyage patterns in which cargo handling work is perform at berth b on elapsed day t.
v: a voyage pattern.
useVoyage$_v$: a variable that is 1 in the case where voyage pattern v is used and 0 in the case where voyage pattern v is not used.

Moreover, in the case of using a dedicated ship, the dedicated ship needs to be not engaged in another voyage at the same time. If the dedicated ship is used on another voyage, the dedicated ship cannot be used in the voyage pattern of the ship allocation plan. Such a constraint is represented by the following formula (3-2).

$$\sum_{v \in VU(u,t)} useVoyage_v + DuringVoyage_{u,t} \leq 1 \quad u \in U, \ t \in T \quad (3-2)$$

where u, U, VU(u,t), and DuringVoyage$_{u,t}$ have the following respective meanings. The same applies hereafter.
u: a dedicated ship.
U: a set of dedicated ships u.
VU(u,t): a set of voyage patterns v in which dedicated ship u is used on elapsed day t.
DuringVoyage$_{u,t}$: a variable that is 1 in the case where dedicated ship u is already scheduled to be used on another voyage on elapsed day t and 0 in the case where dedicated ship u is not scheduled to be used on another voyage on elapsed day t.

Stock transition at each unloading or other port is represented by the following formulas (3-3) and (3-4).

$$y_{p,m,t} = \text{InitialStock}_{p,m} \quad t = 0, \; p \in P, \; m \in M \quad (3-3)$$

$$y_{p,m,t} = y_{p,m,t-1} - Comsum_{p,m} + \sum_{v \in VP(p,t)} useVoyage_v * UnloadAmount_{v,p,m} \quad t \in T \setminus \{0\}, \; p \in P, \; m \in M \quad (3-4)$$

where UnloadAmount$_{v,m,t}$ and VP(p,t) have the following respective meanings. The same applies hereafter.
UnloadAmount$_{v,m,t}$: the unloading amount of brand m in voyage pattern v on elapsed day t.
VP(p,t): a set of voyage patterns v in which unloading is performed at unloading or other port p on elapsed day t.

The constraint formula of the yard capacity at each unloading or other port is represented by the following formula (3-5).

$$\sum_{m \in M} y_{p,m,t} \leq YardCapa_p \quad t \in T, \; p \in P \quad (3-5)$$

The upper and lower limits of the stock transition are represented by the following formulas (3-6) and (3-7).

$$y_{p,m,t} + shortAmount_{p,m,t} \geq StockLowerLmt_{p,m} \quad t \in T, \; p \in P, \; m \in M \quad (3-6)$$

$$y_{p,m,t} \leq StockUpperLmt_{p,m} + overAmount_{p,m,t} \quad t \in T, \; p \in P, \; m \in M \quad (3-7)$$

where shortAmount$_{p,m,t}$ and overAmount$_{p,m,t}$ have the following respective meanings. The same applies hereafter.
shortAmount$_{p,m,t}$: represents the deficiency from the stock lower limit of brand m at unloading or other port p on elapsed day t, and takes a value of 0 or more.
overAmount$_{p,m,t}$: represents the excess from the stock upper limit of brand m at unloading or other port p on elapsed day t, and takes a value of 0 or more.

The constraint of the loadable amount is represented by the following formula (3-8).

$$\sum_{v \in V, p \in P} useVoyage_v * UnloadAmount_{v,p,m} \leq SupplyUpperLmt_m \quad m \in M \quad (3-8)$$

where V means a set of voyage patterns v. The same applies hereafter.
In the voyage pattern creation and selection process according to this embodiment, a solution that minimizes the weighted linear sum of the excess or deficiency from the stock transition upper and lower limits and the transportation cost (demurrage or despatch and charterage) is obtained. This objective function is represented by the following formula (3-9).

$$minimize \; \alpha_1 * \sum_{p \in P, m \in M, t \in T} overAmount_{p,m,t} + \alpha_2 * \sum_{p \in P, m \in M, t \in T} shortAmount_{p,m,t} + \alpha_3 * \sum_{v \in V}(DesDemCost_v + CharterCost_v) * useVoyage_v \quad (3-9)$$

where DesDemCost$_v$ and CharterCost$_v$ have the following respective meanings. The same applies hereafter.
DesDemCost$_v$: a set value of demurrage or despatch in voyage pattern v.
CharterCost$_v$: a set value of charterage in voyage pattern v.

The ship allocation planner 14 performs optimization calculation based on formulas (3-1) to (3-9), and selects a voyage pattern. A set of voyage patterns selected in this way constitutes a ship allocation plan.
Thus, with the ship allocation plan creation device 1 according to this embodiment, when planning a schedule of transporting a plurality of brands of raw material by ship from a plurality of loading ports to a plurality of unloading ports via a transit port, first the required unloading amount is calculated without taking into account the constraints on transportation by ship. Then, the ship allocation planner 14 creates a provisional voyage pattern from every voyage pattern based on the required unloading amount, and then creates a plurality of voyage patterns by determining the ships and voyage schedules to be used in the provisional voyage pattern. From the created plurality of voyage patterns, the ship allocation planner 14 selects a voyage pattern by performing optimization calculation in consideration of the excess and deficiency from the stock transition upper and lower limits and the transportation cost, and creates a ship allocation plan. It is therefore possible to create a ship allocation plan in consideration of both stable supply of raw material to a plurality of unloading ports, etc. and minimum transportation cost without performing simulation.

By performing the foregoing operation, required brands can be stably transported to each steelworks at low cost. In particular, stock management of each steelworks is facilitated by mixing original brands into a brand required by the steelworks as a new brand at a transit port and accumulating each new brand at the transit port. Moreover, while each steelworks which is an unloading port sometimes has limitation on the ship size(s) that can enter the port, for example, a port that can be entered by a ship of a larger size can be selected as a transit port. By performing, at a transit port, mixing of raw materials which has conventionally been carried out at each steelworks, a required brand can be created efficiently. It is also possible to achieve an economic effect of preventing demurrage and the like which are sometimes needed for unloading of a required plurality of raw materials in the case where mixing of raw materials is performed at each steelworks.

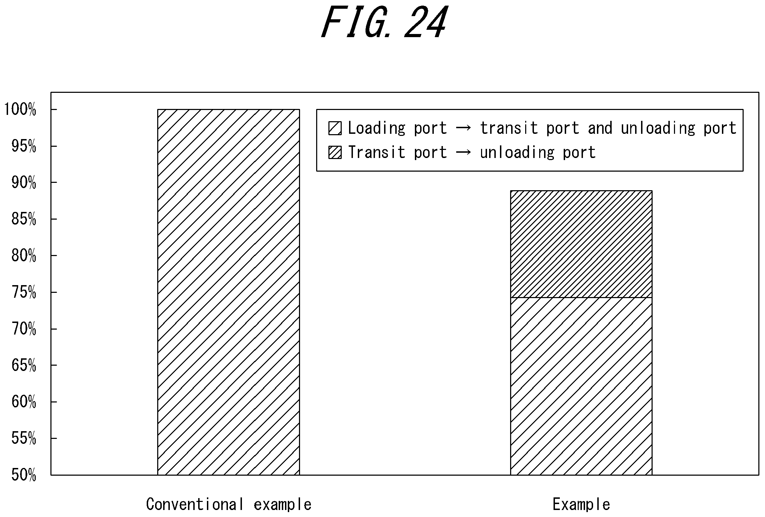

FIG. 24 is a diagram illustrating the effects of an example of a ship allocation plan created using the ship allocation plan creation device 1 according to this embodiment. In this example, calculation was performed for a ship allocation plan of 6 months. The number of unloading ports was 4. The number of transit ports was 1. The number of types of brands to be transported was 30, of which 10 types were subjected to brand aggregation. The amount of iron ore to be transported to the steelworks in six months was 15 million tons in total. The vertical axis in FIG. 24 represents the charterage. The left graph labeled "Conventional Example" illustrates the results (charterage) of a conventional operation method that does not involve brand aggregation. The right graph labeled "Example" illustrates the results of this example, where the charterage of the conventional example is 100 %. The results of this example are illustrated separately for the charterage from the loading ports to the transit port and from the loading ports to the unloading ports and the charterage from the transit port to the unloading ports. In this example, all of the brands subjected to brand aggregation were transported to the transit port and integrated into one brand. Furthermore, in this example, a large ship was used for transportation to the transit port, as a result of which the charter cost was reduced. The large ship herein is a ship capable of carrying 240,000 tons of ore in one transport. Although the large ship cannot enter the unloading port, by using the large ship with a low transportation unit price per ton of cargo for the transportation to the transit port, the charterage can be reduced effectively. In this example, the charterage was able to be reduced by 11 % as a result of brand aggregation. This demonstrates that the ship allocation plan creation device 1 according to this embodiment can be used to reduce a large amount of charterage.

Although the foregoing optimization calculation is performed by mixed integer programming in this embodiment, the present disclosure is not limited to such. For example, the optimization problem can be solved by an optimization technique such as mixed integer programming, constraint programming, or metaheuristic.

A computer may be used to function as the ship allocation plan creation device 1. A program describing the processes for achieving the functions of the ship allocation planning device 1 is stored in a storage in the computer, and the program is read and executed by a central processing unit (CPU) in the computer.

While the presently disclosed techniques have been described by way of the drawings and embodiments, various changes and modifications may be easily made by those of ordinary skill in the art based on the present disclosure. Such changes and modifications are therefore included in the scope of the present disclosure. For example, the functions included in the means, steps, etc. may be rearranged without logical inconsistency, and a plurality of means, steps, etc. may be combined into one means, step, etc. and a means, step, etc. may be divided into a plurality of means, steps, etc.

In the foregoing embodiment, the ship allocation plan creation device 1 calculates a voyage pattern from a plurality of loading ports to a plurality of unloading ports via a transit port. Here, the ship allocation plan creation device 1 may calculate a plurality of voyage patterns separated at the transit port. The transit port has both the property as an unloading port and the property as a loading port (for example, see provisional voyage pattern 2 in FIG. 22). Moreover, a port that can be entered by a ship of a larger size than the ship size that can enter each steelworks can be selected as the transit port, as mentioned above. Hence, there is a possibility that the ship used is changed at the transit port. Particularly in such a case where the transportation conditions are changed at the transit port, the ship allocation plan creation device 1 may calculate each of a voyage pattern from the plurality of loading ports to the transit port and a voyage pattern from the transit port to the plurality of unloading ports by the ship allocation plan creation method described above.

Note that the brands that are transported from the transit port to each steelworks are not limited to new brands, that is, brands obtained by mixing original brands at the transit port. The transit port may temporarily accumulate raw materials (original brands) from the loading ports and transport the required amounts of original brands to each steelworks.

REFERENCE SIGNS LIST

1   ship allocation plan creation device
10   database
11   data reader
12   transit port brand aggregator
13   required cargo handling amount calculator
14   ship allocation planner

**Claims**

1. A ship allocation plan creation method of creating a ship allocation plan that includes a schedule of transporting a plurality of brands of raw material by ship from a plurality of loading ports to a plurality of unloading ports via a transit port, the ship allocation plan creation method comprising

   a transit port brand aggregation process of performing calculation for unloading and mixing predetermined brands to aggregate the predetermined brands as a new brand at the transit port,
   wherein the new brand results from the mixing at a mix proportion to have a desired composition required at the plurality of unloading ports, and is included in brands to be transported to the plurality of unloading ports.

2. The ship allocation plan creation method according to claim 1, comprising:

   a data reading process of reading information including a stock amount and stock upper and lower limits of each of the plurality of brands at each of the transit port and the plurality of unloading ports, berth-related cargo handling efficiency at each of the transit port and the plurality of unloading ports, a loadable amount of each of the plurality of brands at each of the plurality of loading ports, a ship capacity, and a ship transportation cost;
   a required cargo handling amount calculation process of calculating an unloading timing and an unloading amount per unloading at each of the transit port and the plurality of unloading ports, based on the stock upper and lower limits; and
   a ship allocation calculation process of creating the ship allocation plan based on the read information and the calculated unloading timing and unloading amount per unloading.

3. An operation method of operating steelworks using a ship allocation plan created by the ship allocation plan creation method according to claim 1 or 2.

4. A ship allocation plan creation device configured to create a ship allocation plan that includes a schedule of transporting a plurality of brands of raw material by ship from a plurality of loading ports to a plurality of unloading ports via a transit port, the ship allocation plan creation device comprising

   a transit port brand aggregator configured to perform calculation for unloading and mixing predetermined brands to aggregate the predetermined brands as a new brand at the transit port,
   wherein the new brand results from the mixing at a mix proportion to have a desired composition required at the plurality of unloading ports, and is included in brands to be transported to the plurality of unloading ports.

5. The ship allocation plan creation device according to claim 4, comprising:

   a data reader configured to read information including a stock amount and stock upper and lower limits of each of the plurality of brands at each of the transit port and the plurality of unloading ports, berth-related cargo handling efficiency at each of the transit port and the plurality of unloading ports, a loadable amount of each of the plurality of brands at each of the plurality of loading ports, a ship capacity, and a ship transportation cost;
   a required cargo handling amount calculator configured to calculate an unloading timing and an unloading amount per unloading at each of the transit port and the plurality of unloading ports, based on the stock upper and lower limits; and

a ship allocation planner configured to create the ship allocation plan based on the read information and the calculated unloading timing and unloading amount per unloading.

6. The ship allocation plan creation device according to claim 4 or 5, wherein the predetermined brands are unloaded from among all brands of fine ore and lump ore at the transit port.

7. The ship allocation plan creation device according to claim 4 or 5, wherein the predetermined brands are unloaded from among all brands of metallurgical coal at the transit port.

# FIG. 1

# FIG. 2

```
        ┌─────────────┐
        │    Start    │
        └─────────────┘
               │
               ▼
┌──────────────────────────────┐
│      Data reading process    │~ S100
└──────────────────────────────┘
               │
               ▼
┌──────────────────────────────┐
│ Transit port brand aggregation process │~ S200
└──────────────────────────────┘
               │
               ▼
┌──────────────────────────────┐
│      Required cargo handling  │
│   amount calculation process  │~ S300
└──────────────────────────────┘
               │
               ▼
┌──────────────────────────────┐
│ Ship allocation calculation process │~ S400
└──────────────────────────────┘
               │
               ▼
        ┌─────────────┐
        │     End     │
        └─────────────┘
```

# FIG. 3

| Unloading port | Brand | Initial stock amount (1,000t) | Stock lower limit (1,000t) | Stock upper limit (1,000t) |
|---|---|---|---|---|
| Unloading port 1 | Brand A | 20 | 10 | 200 |
| | Brand B | 100 | 20 | 150 |
| | ・・・ | ・・・ | ・・・ | ・・・ |
| Unloading port 2 | Brand A | 30 | 20 | 300 |
| | Brand B | 45 | 10 | 230 |
| | ・・・ | ・・・ | ・・・ | ・・・ |
| ・・・ | ・・・ | ・・・ | ・・・ | ・・・ |

EP 4 191 491 A1

# FIG. 4

| Unloading port | Upper limit (1,000t) |
|---|---|
| Unloading port 1 | 600 |
| Unloading port 2 | 800 |
| . . . | . . . |

## FIG. 5

| Unloading port | Berth | Cargo handling efficiency (1,000t/day) | Cargo handling unavailable days |
|---|---|---|---|
| Unloading port 1 | B1-1 | 30 | 2, 3, 10, 11, 30 |
| | B1-2 | 40 | 49, 50, 51 |
| | . . . | . . . | . . . |
| Unloading port 2 | B2-1 | 15 | 22, 23, 24, 25, 100, 101 |
| | B2-2 | 50 | 50, 51, 52, 140, 141, 142 |
| | . . . | . . . | . . . |
| . . . | | . . . | . . . |

EP 4 191 491 A1

# FIG. 6

| Ship size | Hatch size (1,000t) | Number of hatches |
|---|---|---|
| Cape | 20 | 8 |
| Panamax | 20 | 5 |
| Handy | 25 | 3 |
| . . . | . . . | . . . |

# FIG. 7

| Loading port/unloading port | Ship size that cannot enter port |
|:---:|:---:|
| Loading port 1 | None |
| Loading port 2 | Handy |
| . . . | . . . |
| Unloading port 1 | None |
| Unloading port 2 | Handy |
| . . . | . . . |

# FIG. 8

| Brand | Loadable amount (1,000t) | Loading port |
|---|---|---|
| Brand X | 600 | Loading port 1 |
| Brand Y | 3000 | Loading port 1 |
| . . . | . . . | . . . |

# *FIG. 9*

|  | Number of days of navigation |
|---|---|
| Japan – loading port 1 | 10 days |
| Japan – loading port 2 | 30 days |
| . . . | . . . |

# FIG. 10

|  | Loading port 1 | Loading port 2 | Loading port 3 | . . . |
|---|---|---|---|---|
| Loading port 1 |  | 3 days | 5 days | . . . |
| Loading port 2 |  |  | 3 days | . . . |
| Loading port 3 |  |  |  | . . . |
| . . . |  |  |  |  |

# FIG. 11

|  | Unloading port 1 | Unloading port 2 | Unloading port 3 | . . . |
|---|---|---|---|---|
| Unloading port 1 |  | 1 day | 3 days | . . . |
| Unloading port 2 |  |  | 1 day | . . . |
| Unloading port 3 |  |  |  | . . . |
| . . . |  |  |  |  |

# FIG. 12

|  | Transit port 1 | Transit port 2 | ... |
|---|---|---|---|
| Loading port 1 | 10 days | 15 days | ... |
| Loading port 2 | 20 days | 25 days | ... |
| ... | ... | ... | ... |

# FIG. 13

| | |
|---|---|
| Transit port 1 – Japan | 5 days |
| Transit port 2 – Japan | 2 days |
| ... | ... |

## FIG. 14

| Loading port | Number of days of cargo handling |
|---|---|
| Loading port 1 | 5 days |
| Loading port 2 | 3 days |
| . . . | . . . |

# FIG. 15

| Dedicated ship No. | Ship size | Scheduled voyage end date | DES (yen/hr) | DEM (yen/hr) | Discharging rate (t/hr) |
|---|---|---|---|---|---|
| 1 | Cape | 1 day | ・・・ | ・・・ | ・・・ |
| 2 | Panamax | 10 days | ・・・ | ・・・ | ・・・ |
| ・・・ | ・・・ | ・・・ | ・・・ | ・・・ | ・・・ |

EP 4 191 491 A1

# FIG. 16

EP 4 191 491 A1

| Ship size | Charter cost (yen/day) | DES (yen/hr) | DEM (yen/hr) | Discharging rate (t/hr) |
|---|---|---|---|---|
| Cape | ... | ... | ... | ... |
| Panamax | ... | ... | ... | ... |
| ... | ... | ... | ... | ... |

# FIG. 17

```
        ┌──────────────┐
        │    Start     │
        └──────┬───────┘
               │
               ▼
┌──────────────────────────────────┐
│  Aggregated brand selection process │ ～S1100
└──────────────┬───────────────────┘
               │
               ▼
┌──────────────────────────────────┐
│   Use amount totalization process   │ ～S1200
└──────────────┬───────────────────┘
               │
               ▼
┌──────────────────────────────────┐
│      Stock upper and lower        │ ～S1300
│     limit constraint process      │
└──────────────┬───────────────────┘
               │
               ▼
        ┌──────────────┐
        │     End      │
        └──────────────┘
```

# FIG. 18

```
        ┌─────────────┐
        │    Start     │
        └─────────────┘
               │
               ▼
┌──────────────────────────────┐
│      Unloading port use        │ ～ S2100
│   amount totalization process  │
└──────────────────────────────┘
               │
               ▼
┌──────────────────────────────┐
│    Unloading port upper and    │ ～ S2200
│  lower limit constraint process │
└──────────────────────────────┘
               │
               ▼
┌──────────────────────────────┐
│  Required amount calculation process │ ～ S2300
└──────────────────────────────┘
               │
               ▼
        ┌─────────────┐
        │     End      │
        └─────────────┘
```

## FIG. 19

| Unloading or other port | Brand | Number of elapsed days | | | | |
|---|---|---|---|---|---|---|
| | | 1 day | 2 days | 3 days | 4 days | · · · |
| Transit port 1 | Brand X | 100 | 75 | 0 | 0 | · · · |
| | Brand Y | 100 | 0 | 50 | 0 | · · · |
| | Brand Z | 350 | 0 | 0 | 0 | · · · |
| | · · · | · · · | · · · | · · · | · · · | · · · |
| Unloading port 1 | Brand A | 0 | 10 | 0 | 0 | · · · |
| | Brand B | 0 | 0 | 0 | 200 | · · · |
| | Brand C | 0 | 0 | 0 | 0 | · · · |
| | · · · | · · · | · · · | · · · | · · · | · · · |
| Unloading port 2 | Brand A | 0 | 0 | 0 | 40 | · · · |
| | Brand B | 0 | 0 | 0 | 0 | · · · |
| | Brand C | 30 | 0 | 0 | 0 | · · · |
| | · · · | · · · | · · · | · · · | · · · | · · · |
| · · · | · · · | · · · | · · · | · · · | · · · | · · · |

EP 4 191 491 A1

## FIG. 20

| Unloading or other port | Brand | Request period No. | | | | |
|---|---|---|---|---|---|---|
| | | No. 1 | No. 2 | No. 3 | No. 4 | · · · |
| Transit port 1 | Brand X | 300 | 200 | 600 | 150 | · · · |
| | Brand Y | 300 | 300 | 500 | 200 | · · · |
| | Brand Z | 450 | 200 | 350 | 100 | · · · |
| | · · · | · · · | · · · | · · · | · · · | · · · |
| Unloading port 1 | Brand A | 30 | 100 | 30 | 40 | · · · |
| | Brand B | 120 | 30 | 20 | 400 | · · · |
| | Brand C | 10 | 0 | 0 | 20 | · · · |
| | · · · | · · · | · · · | · · · | · · · | · · · |
| Unloading port 2 | Brand A | 60 | 20 | 60 | 40 | · · · |
| | Brand B | 0 | 10 | 20 | 100 | · · · |
| | Brand C | 30 | 100 | 240 | 100 | · · · |
| | · · · | · · · | · · · | · · · | · · · | · · · |
| · · · | · · · | · · · | · · · | · · · | · · · | · · · |

## FIG. 21

| Route pattern No. | Request period No. | Ship size | Hatch size (千t) | Number of hatches | First loading port | Second loading port | Transit port | First unloading port | Second unloading port |
|---|---|---|---|---|---|---|---|---|---|
| 1 | 3 | Cape | 20 | 8 | Loading port 4 | Loading port 2 | Transit port 2 | Unloading port 4 | None |
| 2 | 3 | Cape | 20 | 8 | Loading port 1 | None | Transit port 1 | Unloading port 2 | Unloading port 3 |
| 3 | 3 | Handy | 25 | 3 | Loading port 3 | Loading port 1 | Transit port 3 | Unloading port 1 | None |
| . . . | . . . | . . . | . . . | . . . | . . . | . . . | . . . | . . . | . . . |
| N | 4 | Cape | 20 | 8 | Loading port 1 | None | Transit port 1 | Unloading port 2 | Unloading port 3 |
| . . . | . . . | . . . | . . . | . . . | . . . | . . . | . . . | . . . | . . . |

# FIG. 22

| Provisional voyage pattern | Loading or other port No. | Unloading or other port No. | Brand | Unloading amount (1,000t) |
|---|---|---|---|---|
| 1 | Loading port 4 | Transit port 2 | Brand I | 40 |
| | Loading port 4 | Transit port 2 | Brand K | 100 |
| | Loading port 2 | Transit port 2 | Brand F | 20 |
| | . . . | . . . | . . . | . . . |
| 2 | Transit port 1 | Unloading port 2 | Brand A | 60 |
| | Transit port 1 | Unloading port 3 | Brand B | 20 |
| | Transit port 1 | Unloading port 3 | Brand C | 40 |
| | Loading port 1 | Transit port 1 | Brand X | 60 |
| . . . | . . . | . . . | . . . | . . . |

# FIG. 23

| Voyage pattern No. | Original provisional voyage pattern No. | Ship used | Japan sailing date | Loading port arrival date | Loading port departure date | Transit port cargo handling berth | Transit port arrival date | Transit port cargo handling start date | Transit port cargo handling end date | First unloading port cargo handling berth | First unloading port arrival date | First unloading port cargo handling start date | First unloading port cargo handling end date | Second unloading port cargo handling berth | Second unloading port arrival date | Second unloading port cargo handling start date | Second unloading port cargo handling end date | Charter cost | Demurrage or despatch |
|---|---|---|---|---|---|---|---|---|---|---|---|---|---|---|---|---|---|---|---|
| i | 2 | Spot | 1 | 15 | 25 | MB1-1 | 30 | 30 | 33 | B2-1 | 39 | 39 | 42 | B3-1 | 43 | 43 | 47 | zz | Xx |
| i+1 | 2 | Spot | 1 | 15 | 25 | MB1-1 | 30 | 30 | 33 | B2-1 | 39 | 39 | 42 | B3-1 | 43 | 44 | 48 | ... | ... |
| i+2 | 2 | Spot | 1 | 15 | 25 | MB1-1 | 30 | 30 | 33 | B2-1 | 39 | 39 | 42 | B3-1 | 43 | 45 | 49 | ... | ... |
| ... | ... | ... | ... | ... | ... | ... | ... | ... | ... | ... | ... | ... | ... | ... | ... | ... | ... | ... | ... |
| j | 2 | Spot | 1 | 15 | 25 | MB1-1 | 30 | 30 | 33 | B2-1 | 39 | 39 | 42 | B3-2 | 43 | 43 | 50 | ... | ... |
| ... | ... | ... | ... | ... | ... | ... | ... | ... | ... | ... | ... | ... | ... | ... | ... | ... | ... | ... | ... |
| k | 2 | Spot | 5 | 19 | 29 | MB1-1 | 32 | 32 | 36 | B2-1 | 43 | 43 | 46 | B3-2 | 47 | 47 | 54 | ... | ... |
| ... | ... | ... | ... | ... | ... | ... | ... | ... | ... | ... | ... | ... | ... | ... | ... | ... | ... | ... | ... |
| l | 2 | Dedicated ship No. 1 | 5 | 19 | 29 | MB1-1 | 32 | 32 | 36 | B2-1 | 43 | 43 | 46 | B3-2 | 47 | 47 | 54 | ... | ... |
| ... | ... | ... | ... | ... | ... | ... | ... | ... | ... | ... | ... | ... | ... | ... | ... | ... | ... | ... | ... |

## FIG. 24

Legend:
- ☐ Loading port → transit port and unloading port
- ☑ Transit port → unloading port

X-axis: Conventional example, Example

Y-axis: 50% to 100%

## INTERNATIONAL SEARCH REPORT

International application No.

PCT/JP2021/025371

### A. CLASSIFICATION OF SUBJECT MATTER
G06Q 10/08(2012.01)i
FI: G06Q10/08

According to International Patent Classification (IPC) or to both national classification and IPC

### B. FIELDS SEARCHED

Minimum documentation searched (classification system followed by classification symbols)
G06Q10/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2000-172745 A (TAIHEIYO CEMENT CORP.) 23 June 2000 (2000-06-23) abstract, claims 1-6 | 1-7 |
| A | JP 4669582 B2 (NIPPON STEEL CORP.) 13 April 2011 (2011-04-13) claim 1 | 1-7 |
| A | JP 2018-106621 A (JFE STEEL CORPORATION) 05 July 2018 (2018-07-05) abstract, claim 5 | 1-7 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 July 2021 (20.07.2021) | 03 August 2021 (03.08.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

Form PCT/ISA/210 (patent family annex) (January 2015)

**INTERNATIONAL SEARCH REPORT**
Information on patent family members

International application No.

PCT/JP2021/025371

| Patent Documents referred in the Report | Publication Date | Patent Family | Publication Date |
|---|---|---|---|
| JP 2000-172745 A | 23 Jun. 2000 | (Family: none) | |
| JP 4669582 B2 | 13 Apr. 2011 | CN 102137803 A claim 1 KR 10-2011-0050475 A claim 1 | |
| JP 2018-106621 A | 05 Jul. 2018 | (Family: none) | |

**REFERENCES CITED IN THE DESCRIPTION**

**Patent documents cited in the description**

- JP H11310313 A
- JP 4669583 B